(19)

**Europäisches Patentamt**
**European Patent Office**
**Office européen des brevets**

(11) **EP 4 261 039 A1**

(12) **EUROPEAN PATENT APPLICATION**
published in accordance with Art. 153(4) EPC

(43) Date of publication:
**18.10.2023 Bulletin 2023/42**

(21) Application number: **21903250.5**

(22) Date of filing: **30.11.2021**

(51) International Patent Classification (IPC):
$B32B\ 27/00^{(2006.01)}$    $B32B\ 27/20^{(2006.01)}$
$B29B\ 17/02^{(2006.01)}$    $C08L\ 23/02^{(2006.01)}$
$C08L\ 67/00^{(2006.01)}$    $C08L\ 77/00^{(2006.01)}$
$C08L\ 101/00^{(2006.01)}$    $C08L\ 79/08^{(2006.01)}$
$B32B\ 15/08^{(2006.01)}$    $C08K\ 3/08^{(2006.01)}$

(52) Cooperative Patent Classification (CPC):
**B29B 17/02; B32B 15/08; B32B 27/00;**
**B32B 27/20; C08K 3/08; C08L 23/02; C08L 67/00;**
**C08L 77/00; C08L 79/08; C08L 101/00**

(86) International application number:
**PCT/JP2021/043954**

(87) International publication number:
**WO 2022/124146 (16.06.2022 Gazette 2022/24)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **09.12.2020 JP 2020204561**
         **09.12.2020 JP 2020204562**

(71) Applicant: **Kao Corporation**
**Chuo-ku**
**Tokyo 103-8210 (JP)**

(72) Inventors:
• **FUKUI, Shunsuke**
  **Tokyo 131-0044 (JP)**
• **KATAYANAGI, Gota**
  **Tokyo 131-0044 (JP)**
• **SATO, Keito**
  **Wakayama-shi, Wakayama 640-8404 (JP)**
• **AOKI, Katsutoshi**
  **Tokyo 131-0044 (JP)**

(74) Representative: **Hoffmann Eitle**
**Patent- und Rechtsanwälte PartmbB**
**Arabellastraße 30**
**81925 München (DE)**

(54) **RESIN FILM MATERIAL, LAMINATED STRUCTURE COMPRISING RESIN FILM MATERIAL, RESIN COMPOSITION MANUFACTURING METHOD, RESIN FILM MATERIAL MANUFACTURING METHOD, AND LAMINATED STRUCTURE MANUFACTURING METHOD**

(57) The present invention provides a resin film material produced from a resin material that includes a laminate that includes a resin layer with an evaporated metal layer, the resin film material containing a metal in the evaporated metal layer in the form of particles, wherein the metal particles are dispersed in the resin film material, and the number of metal particles with an area-equivalent diameter of 200 $\mu$m or more present per cm$^2$ of the resin film material is 1 or less. It is preferable that the resin film material is produced from a resin material that is made of a laminate group that includes the laminate that includes a resin layer with an evaporated metal layer and a laminate that includes a metal layer-free resin layer.

EP 4 261 039 A1

**Description**

Technical Field

The present invention relates to a resin film material and a laminate structure that includes the resin film material. The present invention also relates to a method for producing a resin composition from a resin waste. The present invention also relates to a method for producing a resin film material and a method for producing a laminate structure.

Background Art

In recent years, the idea of product development based on three aspects of corporate management and growth including Environment, Society, and Governance, or in other words, ESG aspects, is growing. Take resin containers, for example, there is a demand for reducing the thickness or weight of the containers to reduce the environmental load. Also, instead of petroleum-derived resins, regenerable plant-derived materials with a lower carbon content are used to ensure sustainable raw materials. Furthermore, it is desired to proactively use regenerated resins to produce resin containers so as to recycle the resin containers, as well as using resin materials that are easy to recycle.

In resin containers, for the purpose of enhancing the stability and the preservability of the content contained in the resin containers, various types of metal layers inclding aluminiumu layer may be provided. As conventional techniques for recycling a resin container that includes a metal layer, for example, the techniques disclosed in Patent Literatures 1 to 5 described below disclose are known.

Specifically, Patent Literature 2 discloses a method including melt kneading a multilayer film composed of an aluminum foil laminated on a plastic layer in a biaxial extrusion machine to regenerate a resin that contains the crushed aluminum foil.

Also, Patent Literature 3 discloses a method including: separating a packaging material waste into an aluminum foil laminate packaging material in which an aluminum foil is laminated and an aluminum evaporation packaging material in which aluminum is evaporated; and dry-distilling the aluminum foil laminate packaging material and the aluminum evaporation packaging material at different temperatures to thermally decompose the packaging materials to recover aluminum.

Citation List

Patent Literatures

Patent Literature 1: JP 2002-309005A
Patent Literature 2: JP 2006-192748A
Patent Literature 3: JP 2012-21200A
Patent Literature 4: JP 2013-35272A
Patent Literature 5: U.S. Patent Application Publication No. 2019/062921

Summary of Invention

The present invention relates to a resin film material produced from a resin material that includes a laminate that includes a resin layer having an evaporated metal layer, the resin film material containing a metal in the evaporated metal layer in the form of particles.

It is preferable that the metal particles are dispersed in the resin film material, and the number of metal particles with an area-equivalent diameter of 200 $\mu$m or more present per $cm^2$ of the resin film material is 1 or less.

The present invention also relates to a laminate structure that includes the resin film material described above and a resin layer or a metal foil.

The present invention also relates to a method for producing a resin composition.

In the production method described above, it is preferable that, from a resin waste mixture that contains a first resin waste that includes a resin layer with a metal foil layer and a second resin waste that includes a resin layer with an evaporated metal layer, the first resin waste that includes a resin layer with a metal foil layer is removed.

In the production method described above, it is preferable that the resin waste mixture left after removal of the first resin waste is melt molded to obtain a resin composition in which metal particles derived from the evaporated metal layer are dispersed.

The present invention also relates to a method for producing a resin film material. In this production method, it is preferable to produce a resin composition using the method described above, and extrusion mold the resin composition.

Furthermore, the present invention relates to a method for producing a laminate structure. In this production method, it is preferable to produce a resin composition using the method described above, and co-extrusion mold or extrusion lamination mold the resin composition.

Detailed Description of the Invention

A regenerated resin obtained from a resin container that includes a metal layer contains a metal contained in the resin container before regeneration. That is, the regenerated resin contains a metal. In the case where, for example, a film is produced from a regenerated resin that contains a metal through molding, depending on the presence state of the metal, the metal may cause a disruption in the molding process, and a reduction in the quality of the produced film. The techniques disclosed in Patent Literatures 1 to 5 listed above mainly focus on the recycle of a resin container that contains a metal layer per se, and do not give sufficient consideration to the quality of a resin molded body, specifically, a film material, produced from a regenerated resin obtained through recycling.

In particular, the regenerated resin regenerated using the method disclosed in Patent Literature 2 contains many crushed pieces of the aluminum foil. The crushed pieces cause a disruption in the molding process when melt molding the regenerated resin, and a reduction in the quality of the produced molded body.

Also, the technique disclosed in Patent Literature 3 relates to recovering aluminum from a packaging material that contains aluminum, and gives no consideration to recovering a resin.

Also, Patent Literatures 4 and 5 give no consideration even to producing a film from a regenerated resin.

Accordingly, the present invention relates to an improvement of a resin film material produced from a regenerated resin obtained from a laminate that includes a resin layer that has a metal layer.

The present invention also relates to providing a method for producing a useful regenerated resin composition from a resin waste that includes resin layer that has a metal layer.

Hereinafter, the present invention will be described based on a preferred embodiment of the present invention. The present invention relates to a resin film material. The resin film material of the present invention contains a resin and a metal. The type of the metal and the presence state of the metal will be described later. The term "resin" used in the description of the present application broadly encompasses thermoplastic resins, preferably, in particular, thermoplastic resins capable of forming films. The term "resin" broadly encompasses thermoplastic resins capable of forming films. The resin film material of the present invention is in the form of a film. The resin film material of the present invention is usually composed of a monolayer film.

A feature of the resin film material of the present invention lies in a raw material for producing the resin film material. The raw material is a resin material that includes a laminate that includes a resin layer with an evaporated metal layer. Hereinafter, the resin material used as the raw material for producing the resin film material of the present invention will be described.

The resin material used in the present invention includes a laminate that includes a resin layer with an evaporated metal layer. The laminate has at least a two-layer structure that includes at least an evaporated metal layer and a resin layer. Accordingly, in the description given below, the laminate may also be referred to as an "evaporated metal layer-attached laminate". The evaporated metal layer is a layer in the form of a thin film formed from any type of metal using a dry thin-film forming method. As the dry thin-film forming method, a vacuum evaporation method is typically used. However, the dry thin-film forming method is not limited thereto. For example, in the present invention, the evaporated metal layer can be formed as follows: a metal is heated and evaporated in a vacuum container with a reduced pressure of about 0.0001 Pa to condensate the metal on the surface of a substrate, specifically, a resin film, placed in the container in advance, to form a thin film of the metal (i.e., the evaporated metal layer).

It is known that an evaporated metal layer has a very small thickness, and the thickness is usually, for example, about 10 nm or more and about 1000 nm or less. A metal foil is known as a material similar to an evaporated metal layer. However, the thickness of an evaporated metal layer is smaller than the thickness of a metal foil by about two orders of magnitude, and thus an evaporated metal layer and a metal foil are clearly distinguished from each other in terms of thickness. The thickness of a metal foil is about 5 $\mu$m at the smallest.

There is no particular limitation on the type of metal that constitutes the evaporated metal layer, and an appropriate metal can be selected according to the specific application of the intended resin film material, ease of evaporation, and the like. Typically, it is preferable to use aluminum. However, other metals such as, for example, chromium, zinc, gold, silver, platinum, and nickel can also be used. Also, these metals may be used in a combination of two or more.

The evaporated metal layer is provided adjacent to the resin layer, and the two layers together constitute an evaporated metal layer-attached laminate. There is no particular limitation on the shape of the evaporated metal layer-attached laminate. For example, the evaporated metal layer-attached laminate may be a three-dimensional molded body of any configuration, a two-dimensional molded body such as a film or crushed pieces, or the like. Specifically, the evaporated metal layer-attached laminate may be a resin container that is a three-dimensional molded body, a resin film that is a two-dimensional molded body, or the like. It is sufficient that the evaporated metal layer-attached laminate includes at least one evaporated metal layer and at least one resin layer, and the evaporated metal layer-attached laminate may include two or more evaporated metal layers and two or more resin layers. In the case where the evaporated metal layer-attached laminate includes two or more evaporated metal layers, the types of metals that constitute the evaporated metal layers may be the same or different. The same applies to the resin layer. In the case where the evaporated metal layer-attached laminate includes two or more resin layers, the types of resins that constitute the resin layers may be the same or different.

In the case where the evaporated metal layer-attached laminate includes two or more resin layers, the evaporated metal layer-attached laminate preferably includes at least one polyolefin layer. Also, the evaporated metal layer-attached laminate preferably includes at least one layer that contains one type or two or more types of resins selected from the group consisting of a polyester, a polyamide, and a polyimide. By producing the resin film material of the present invention from the resin material that includes the evaporated metal layer-attached laminate that includes two or more resin layers described above, the heat sealability, elasticity, and dimensional stability when producing the laminate structure using the resin film material are preferably improved. Accordingly, it is preferable to produce the resin film material of the present invention from the resin material that includes the evaporated metal layer-attached laminate that includes two or more resin layers described above

Examples of the polyolefin include polyethylene, polypropylene, an ethylene-$\alpha$ olefin copolymer, and the like. These polyolefins can be used alone or in a combination of two or more.

Examples of the polyethylene include a low-density polyethylene, a medium-density polyethylene, a high-density polyethylene, a linear low-density polyethylene, and the like.

Examples of the polypropylene include an isotactic polypropylene, a syndiotactic polypropylene, an atactic polypropylene, and the like.

Examples of $\alpha$ olefin that constitutes the ethylene-$\alpha$ olefin copolymer include propylene, 1-butene, 1-pentene, 1-hexene, and 1-octene, and the like.

Examples of the polyester include polyethylene terephthalate, polybutylene terephthalate, and the like.

Examples of the polyamide include nylon 6, nylon 6,6, nylon 4,6, and the like.

Examples of the polyimide include poly (4,4'-oxydiphenylene pyromellitic imide), and the like.

Also, as the polyolefin, it is also possible to use a biomass-derived polymer material such as a biopolyethylene or a biopolypropylene.

As the evaporated metal layer-attached laminate, a virgin laminate produced for the purpose of being used as the raw material for producing the resin film material of the present invention can be used.

Alternatively, as the evaporated metal layer-attached laminate, it is also possible to use an already-used laminate that includes a resin layer with an evaporated metal layer. For example, an already-used two-dimensional or three-dimensional molded body that includes a resin layer with an evaporated metal layer, or crushed pieces of the already-used two-dimensional or three-dimensional molded body can be used as the evaporated metal layer-attached laminate that is used as the raw material for producing the resin film material of the present invention.

Alternatively, it is also possible to use, as the evaporated metal layer-attached laminate, a scrap material that is left over from the production of the two-dimensional or three-dimensional molded body and by itself has no product value.

In the description given below, an already-used article and a scrap material will also be referred to collectively as a "waste". That is, the term "waste" used in the description of the present application refers to the concept that encompasses both an already-used article and a scrap material that is left over from the production of a product and by itself has no product value.

Among the evaporated metal layer-attached laminates described above, from the viewpoint of reducing the environmental load, it is preferable to use an already-used two-dimensional or three-dimensional molded body as is in the form of a laminate, or use crushed pieces of the already-used two-dimensional or three-dimensional molded body in the form of a laminate, rather than using a virgin laminate.

From the same viewpoint, it is also preferable to use a scrap material that is left over from the production of the already-used two-dimensional or three-dimensional molded body as the evaporated metal layer-attached laminate.

As described above, the resin film material of the present invention is preferably a regenerated resin film material produced from a resin material waste.

The resin material used as the raw material for producing the resin film material of the present invention may be composed only of the evaporated metal layer-attached laminate described above, or may include an additional material in addition to the evaporated metal layer-attached laminate. As the additional material, a resin layer that does not have a metal layer may be included. The resin layer is preferably made of a single material. The material may be, for example, polyolefin. As the additional material, a laminate that includes a resin layer that does not have a metal layer may also be included. The laminate includes neither an evaporated metal layer nor a metal foil layer. Accordingly, in the description given below, the laminate may also be referred to as a "metal layer-free laminate". It is preferable that the metal layer-free laminate is basically composed of two or more resin layers. The two or more resin layers are made using different resins. Accordingly, the metal layer-free laminate contains at least two or more types of resins as a whole.

It is sufficient that the metal layer-free laminate includes no metal layer, and the inclusion of a metal other than in the form of the metal layer is allowed. For example, as long as the metal layer-free laminate includes no metal layer, fine metal pieces that are dispersed in the resin layer are allowed.

As the metal layer-free laminate, a virgin laminate produced for the purpose of being used as the raw material for producing the resin film material of the present invention can be used.

Alternatively, as the metal layer-free laminate, it is also possible to use an already-used laminate that includes a resin layer that does not have a metal layer. For example, it is possible to use an already-used two-dimensional or three-dimensional molded body that includes a resin layer that does not have an evaporated metal layer as is, or use crushed pieces of the already-used two-dimensional or three-dimensional molded body as the metal layer-free laminate that is used as the raw material for producing the resin film material of the present invention.

Alternatively, it is also possible to use, as the metal layer-free laminate, a scrap material that is left over from the production of the two-dimensional or three-dimensional molded body and by itself has no product value.

Among the metal layer-free laminates described above, from the viewpoint of reducing the environmental load, it is preferable to use an already-used two-dimensional or three-dimensional molded body as is in the form of a laminate, or use crushed pieces of the already-used two-dimensional or three-dimensional molded body in the form of a laminate, rather than using a virgin laminate.

From the same viewpoint, it is also preferable to use a scrap material that is left over from the production of the already-used two-dimensional or three-dimensional molded body as the metal layer-free laminate.

The metal layer-free laminate preferably includes at least one polyolefin layer from the viewpoint of improving the heat sealability when producing the laminate structure using the intended resin film material.

From the viewpoint of making this advantageous effect more pronounced, the metal layer-free laminate preferably includes two or more polyolefin layers. In this case, the polyolefin layers may be made of the same type of polyolefin or different types of polyolefins. Specific examples of the polyolefins are the same as those listed above.

As described above, the resin material used as the raw material for producing the resin film material of the present invention is composed of either (a) only an evaporated metal layer-attached laminate or (b) a laminate group that includes an evaporated metal layer-attached laminate and a metal layer-free laminate. Whether the resin material is produced using (a) only an evaporated metal layer-attached laminate or (b) a laminate group that includes an evaporated metal layer-attached laminate and a metal layer-free laminate can be determined as appropriate according to the metal content, the resin content, and the like of the intended resin film material.

For example, the proportion of the evaporated metal layer-attached laminate in the resin material can be set to preferably 10 mass% or more and 100 mass% or less, more preferably 15 mass% or more and 90 mass% or less, and even more preferably 20 mass% or more and 80 mass% or less.

Irrespective of whether the resin material is produced using (a) or (b) described above, the resin material used as the raw material for producing the resin film material of the present invention contains only one type or two or more types of resins. In the case of the latter, the two or more types of resins are blended in the resin material. This does not negatively affect the production of the resin film material of the present invention using the resin material as the raw material.

The resin film material of the present invention can be obtained by melt molding the above-described resin material as the raw material. The resin film material of the present invention can be produced by, for example, extrusion molding the resin material. Specific examples of the extrusion molding include T-die molding, inflation molding, injection molding, and the like.

The present invention also provides a method for producing a resin film material from a resin material that includes a laminate that includes a resin layer with an evaporated metal layer made of a metal, the resin film material containing the metal in the form of particles. The production method includes the step of melt molding the resin material such that the metal particles are dispersed in the resin film material and the number of metal particles with an area-equivalent diameter of 200 $\mu$m or more present per cm$^2$ of the resin film material is 1 or less.

A compatibilizer may be added during melt molding. As the compatibilizer, it is preferable to use, for example, a compound that contains a polar group and a polyolefin. It is possible to expect that the compound that contains a polar group and a polyolefin exhibits an affinity because the polyolefin portion has an affinity for a resin, for example, polyolefin contained in the intended resin film material, and the polar group portion reacts or interacts with a foreign substance such as polyamide. It is thereby possible to expect that the matrix of the intended resin film material has a high-affinity structure.

The resin film material of the present invention is produced from the above-described resin material. Accordingly, the resin film material preferably contains any one of a polyolefin resin, a polyester resin, and a polyamide resin, and more preferably contains a polyolefin resin as the main component. From the viewpoint of facilitating the regeneration of resins widely used as the resin materials of packaging containers, it is even more preferable that the resin film material of the present invention contains polyethylene as the main component.

The resin film material of the present invention is produced from a resin material composed only of an evaporated metal layer-attached laminate or a resin material composed of an evaporated metal layer-attached laminate and a metal layer-free laminate. Accordingly, the resin film material of the present invention contains a metal in the form of particles. The metal particles are derived from the evaporated metal layer of the evaporated metal layer-attached laminate, and because the metal particles are melt kneaded during the production process, the metal particles are dispersed in the resin film material. As a result of studies conducted by the inventors of the present invention, it has been found that, when metal particles are dispersed in a resin film material, the thermal expansion rate of the resin film material can be reduced. Specifically, it is widely known that a resin has a thermal expansion rate higher than that of a metal. It has been found that, when metal particles are dispersed in a resin, the properties of the metal that has a relatively low thermal expansion rate are reflected to the resin, and the thermal expansion rate of the resin film material is reduced.

The fact that the resin film material of the present invention has a low thermal expansion rate means that the dimensional stability against heat is high. Accordingly, when a laminate structure is produced using the resin film material of the present invention, the resin film material is unlikely to be affected by heat, and thus an advantageous effect of improving processability can be obtained.

Also, the fact that the resin film material of the present invention has a low thermal expansion rate also contributes to the improvement of the storage stability of the resin film material.

From the viewpoint of further reducing the thermal expansion rate of the resin film material, the metal content in the resin film material is preferably 0.01 mass% or more, more preferably 0.05 mass% or more, and even more preferably 0.1 mass% or more.

From the same viewpoint, the metal content in the resin film material is preferably 0.3 mass% or less, more preferably 0.25 mass% or less, and even more preferably 0.2 mass% or less.

To summarize the above, the metal content in the resin film material is preferably 0.01 mass% or more and 0.3 mass% or less, more preferably 0.05 mass% or more and 0.25 mass% or less, and even more preferably 0.1 mass% or more and 0.2 mass% or less.

In the present invention, in particular, the metal is aluminum, and the aluminum content in the resin film material is preferably within the above-described range.

As described above, the resin film material of the present invention contains a metal. It is preferable that the metal is present dispersed in the form of fine particles in the resin film material, rather than in the form of coarse particles. When coarse metal particles are present in the resin film material, breakage of the resin film material is likely to occur due to the coarse particles, as a result of which, the thermal expansion rate of the resin film material increases, and the advantageous effects obtained by dispersing a metal in the resin film material are lost.

The inventors of the present invention conducted further in-depth studies from the viewpoint of suppressing an increase in the thermal expansion rate of the resin film material when coarse metal particles are present in the resin film material, and they found that, when the number of metal particles with an area-equivalent diameter of 200 $\mu$m or more present per cm$^2$ of the resin film material is preferably 1 or less, the increase in the thermal expansion rate can be effectively suppressed. From the viewpoint of making this advantageous effect more pronounced, the number of metal particles with an area-equivalent diameter of 200 $\mu$m or more present per cm$^2$ of the resin film material is more preferably 0.7 or less, and even more preferably 0.3 or less. The reason that the area-equivalent diameter of metal particles is set to 200 $\mu$m is that the inventors of the present invention found a phenomenon in which, due to the presence of metal particles with an area-equivalent diameter of 200 $\mu$m or more, the occurrence of breakage of the resin film material increases pronouncedly.

From the viewpoint of further suppressing the increase in the thermal expansion rate of the resin film material when coarse metal particles are present in the resin film material, the number of metal particles with an area-equivalent diameter of 100 $\mu$m or more present per cm$^2$ of the resin film material is preferably 15 or less, more preferably 10 or less, and even more preferably 5 or less. The reason that the area-equivalent diameter of metal particles is set to 100 $\mu$m is that the inventors of the present invention found a phenomenon in which, due to the presence of metal particles with an area-equivalent diameter of 100 $\mu$m or more, the occurrence of thickness variation in the resin film material increases rapidly and pronouncedly.

As a result of studies conducted by the inventors of the present invention, it has been found that, from the viewpoint of even further suppressing the increase in the thermal expansion rate of the resin film material, it is preferable that h/Dp that is the ratio of h relative to Dp takes a value greater than 15, where Dp represents the average particle diameter of metal particles contained in the resin film material, and h represents the average surface-to-surface distance of the metal particles. From the viewpoint of making this advantageous effect more pronounced, the value of the ratio h/Dp is more preferably 20 or more, and even more preferably 25 or more. The effect of suppressing the increase in the thermal expansion rate is more effective as the ratio h/Dp takes a larger value. However, the upper limit value is about 200.

The average surface-to-surface distance h of the metal particles described above is calculated from the Bansal and Ardell's approximation equation. The Bansal and Ardell's approximation equation is shown below:

$$h = Dp\{0.11F^{-3/4}\},$$

where h represents the average surface-to-surface distance of metal particles (unit: $\mu$m), Dp represents the average particle diameter of the metal particles (unit: $\mu$m), and F represents particle volume concentration (unit: dimensionless number).

That is,

$$h/Dp = 0.11\ F^{-3/4}.$$

The method for measuring the particle volume concentration F in this equation will be described in Examples section, which will be given later.

In order to prevent coarse metal particles from being present in the resin film material, for example, the following measures may be taken: the resin material that includes the evaporated metal layer-attached laminate is sufficiently melt kneaded; and a laminate that includes a resin layer with a metal foil layer is not used as the resin material. A metal foil has a thickness of several to several tens of microns, and thus when a resin film material is molded from a resin material that includes a laminate that include a resin layer with a metal foil layer, coarse particles derived from the metal foil may be generated in the resin film material.

The reason that the presence of coarse metal particles becomes a problem in the present invention is that the present invention relates to a film material, or in other words, a thin article. In contrast to the present invention, in a thick three-dimensional molded body, the presence of coarse metal particles is unlikely to be the main cause of the increase in the thermal expansion rate. This is because the problem of breakage is unlikely to occur in the thick three-dimensional molded body. Accordingly, from the viewpoint of effectively suppressing the increase in the thermal expansion rate of the resin film material of the present invention, the resin film material has an average thickness of preferably 500 $\mu$m or less, more preferably 300 $\mu$m or less, and even more preferably 100 $\mu$m or less.

From the same viewpoint, the resin film material has an average thickness of 10 $\mu$m or more, more preferably 15 $\mu$m or more, and even more preferably 20 $\mu$m.

To summarize the above, the resin film material has an average thickness of preferably 10 $\mu$m or more and 500 $\mu$m or less, more preferably 15 $\mu$m or more and 300 $\mu$m or less, and even more preferably 20 $\mu$m or more and 100 $\mu$m or less.

Because the resin film material of the present invention contains a very small amount of coarse metal particles, even when the resin film material is thin in thickness, the surface smoothness of the resin film material is high. Accordingly, a laminate structure can be easily produced by laminating a resin layer and/or a metal foil on the surface of the resin film material of the present invention. In the laminate structure thus obtained, the delamination strength between the resin film material and the resin layer and/or the metal foil can be sufficiently high. That is, according to the present invention, it is possible to provide a resin film material suitable for use as a raw material for producing a laminate that has a high surface smoothness and a high delamination strength.

A resin layer can be laminated on the surface of the resin film material using, for example, extrusion lamination molding. Because the resin film material has a high surface smoothness, a laminate structure with a high delamination strength can be smoothly obtained through extrusion lamination molding.

The reason that the surface smoothness becomes a problem in the present invention is that the present invention relates to a film material, or in other words, a thin article. In contrast to the present invention, in a thick three-dimensional molded body, the presence of coarse metal particles is unlikely to be the main cause of the reduction in the surface smoothness. This is because, in the thick three-dimensional molded body, the thickness of the molded body is much larger than the size of the coarse particles. That is, the problem of suppressing the presence of coarse particles as much as possible to smooth the surface is specific to a resin film material.

The laminate structure produced from the resin film material of the present invention may be a two-dimensional molded body or a three-dimensional molded body. For example, a two-dimensional molded body such as a film can be produced from the resin film material of the present invention. Alternatively, a three-dimensional molded body such as a standing pouch can be produced by processing the two-dimensional molded body.

In the laminate structure produced from the resin film material of the present invention, a polyolefin, a polyester, a polyamide, a polyimide, and the like can be used as the material of the resin layer laminated on the resin film material. Specific examples of these resins are the same as those listed above. For example, a laminate structure with a high strength and excellent thermal resistance can be obtained by laminating stretched polyethylene terephthalate on the outer side of the laminate structure. From the viewpoint of facilitating the regeneration of resins widely used as the resin materials of packaging containers, it is more preferable that the material of the resin layer contains polyethylene as the main component. As a resin other than those listed above, for example, an ethylene-vinyl alcohol copolymer can be used. The ethylene-vinyl alcohol copolymer is a resin that has excellent gas barrier properties against various types of gases including oxygen, and thus a laminate structure obtained by laminating a resin layer that contains an ethylene-vinyl alcohol copolymer on the resin film material of the present invention has high gas barrier properties. Accordingly, the laminate structure is suitable for use as a packaging container for containing any type of liquid or powder content.

Furthermore, for the purpose of increasing the gas barrier properties, a material other than the resin layer such as an evaporated metal layer can also be laminated.

Next, a preferred method for producing a resin material that is used as a raw material for producing the resin film material of the present invention will be described. The resin material is a composition that contains a resin and a component other than the resin. Accordingly, in the description given below, this resin material may also be referred to as a "resin composition". The resin composition obtained using the method for producing a resin composition of the present invention is suitable for use as the raw material for producing the resin film material of the present invention. However, it is needless to say that the resin composition can also be used as a raw material for producing other resin molded bodies.

In the present invention, the resin composition is preferably produced from a resin waste.

In the method for producing a resin composition of the present invention, a resin waste mixture is prepared first. The resin waste mixture contains a first resin waste that includes a resin layer with a metal foil layer and a second resin waste that includes a resin layer with an evaporated metal layer. Usually, a resin waste mixture is generated from households, commercial facilities, factories, and the like, and disposed of in incineration facilities and industrial waste disposal facilities. In the present invention, the reduction of the environmental load is achieved by recycling a generated resin waste mixture without incinerating or disposing of the resin waste mixture. That is, the resin composition produced according to the present invention is a regenerated resin composition.

An example of the second resin waste that includes a resin layer with an evaporated metal layer, contained in the resin waste mixture, is the above-described laminate that includes a resin layer with an evaporated metal layer, or in other words, the evaporated metal layer-attached laminate.

The first resin waste that includes a resin layer with a metal foil layer, contained in the resin waste mixture, will be described below.

The first resin waste that includes a resin layer with a metal foil layer is a laminate that has at least a two-layer structure that includes at least a metal foil layer and a resin layer. Accordingly, in the description given below, the laminate may also be referred to as a "metal foil layer-attached laminate". The metal foil layer is formed by rolling a metal into a foil. It is known that a metal foil layer has a thickness larger than that of the evaporated metal layer described above. Usually, the thickness of the metal foil layer is, for example, about 5 μm or more and about 100 μm or less.

There is no particular limitation on the type of metal that constitutes the metal foil layer. Typically, aluminum is used. However, other metals such as, for example, chromium, zinc, gold, silver, platinum, and nickel can also be used. The metal foil may be composed of a combination of two or more metals.

The metal foil layer is provided adjacent to the resin layer, and the two layers together constitute a metal foil layer-attached laminate. There is no particular limitation on the shape of the metal foil layer-attached laminate. For example, the metal foil layer-attached laminate may be a three-dimensional molded body of any configuration, a two-dimensional molded body such as a film or crushed pieces, or the like. Specifically, the metal foil layer-attached laminate may be a resin container that is a three-dimensional molded body, a resin film that is a two-dimensional molded body, or the like. It is sufficient that the metal foil layer-attached laminate includes at least one metal foil layer and at least one resin layer, and the metal foil layer-attached laminate may include two or more metal foil layers and two or more resin layers. In the case where the metal foil layer-attached laminate includes two or more metal foil layers, the types of metals that constitute the metal foil layers may be the same or different. The same applies to the resin layer. In the case where the metal foil layer-attached laminate includes two or more resin layers, the types of resins that constitute the resin layers may be the same or different.

The metal foil layer-attached laminate is removed from the resin waste mixture in a removal step, which will be described later, and thus the raw material of the resin composition to be produced in the present invention contains almost no metal foil layer-attached laminate. Accordingly, the types of resins that constitute the resin layers of the metal foil layer-attached laminate do not affect the production method of the present invention.

The metal that constitutes the metal foil layer-attached laminate and the metal that constitutes the evaporated metal layer-attached laminate may be the same type of metal or different types of metals. Likewise, the resin that constitutes the metal foil layer-attached laminate and the resin that constitutes the evaporated metal layer-attached laminate may be the same type of resin or different types of resins.

The resin waste mixture may be made using only the metal foil layer-attached laminate and the evaporated metal layer-attached laminate. Alternatively, the resin waste mixture may contain an additional material in addition to the metal foil layer-attached laminate and the evaporated metal layer-attached laminate. As the additional material, the above-described metal layer-free laminate may be contained. Details of the metal layer-free laminate are as described above.

In the present invention, the resin waste composed of the metal foil layer-attached laminate is separated and removed from the resin waste mixture. The resin waste mixture left after separation is, for example, either (a) a resin waste composed of one type or two or more types of evaporated metal layer-attached laminates, or (b) a resin waste composed of one type or two or more types of evaporated metal layer-attached laminates and a resin waste composed of one type or two or more types of metal layer-free laminates. Whether to use the resin waste (a) or the resin wastes (b) can be selected as appropriate according to the metal content, the resin content, and the like of the intended resin composition.

For example, the proportion of the evaporated metal layer-attached laminate in the resin waste mixture left after separation can be set to preferably 10 mass% or more and 100 mass% or less, more preferably 15 mass% or more and 90 mass% or less, and even more preferably 20 mass% or more and 80 mass% or less.

Also, it is most preferable that the resin waste mixture left after separation does not contain the resin waste composed of the metal foil layer-attached laminate. However, as long as coarse particles, which will be described later, are not contained in the resin composition produced from the resin waste mixture left after separation, or in other words, within a range that does not affect the quality of the produced resin composition, the resin waste composed of the metal foil layer-attached laminate may be contained. For example, the proportion of the metal foil layer-attached laminate in the resin waste mixture left after separation is preferably 2 mass% or less at most, more preferably 1.5 mass% or less, and even more preferably 0 mass%.

Irrespective of whether the resin waste mixture left after separation is either (a) or (b) described above, the resin waste mixture left after removal of the resin waste composed of the metal foil layer-attached laminate contains only one type or two or more types of resins. In the case of the latter, the two or more types of resins are blended in the resin composition produced from the resin waste mixture. This does not negatively affect the production of the molded body using the resin composition as the raw material.

The reason that the resin waste composed of the metal foil layer-attached laminate is removed from the resin waste mixture that contains the resin waste composed of the metal foil layer-attached laminate and the resin waste composed of the evaporated metal layer-attached laminate is to increase the quality of the resin composition that is the intended product of the production method of the present invention. A metal foil has a thickness of several to several tens of microns, and thus when the resin waste composed of the metal foil layer-attached laminate is contained in the resin waste mixture, the resin composition produced from the resin waste mixture may contain coarse metal particles derived from the metal foil. When coarse metal particles are contained in the resin composition, the coarse particles may be contained in the molded body produced from the resin composition through molding, or in other words, the resin film material of the present invention. Due to the presence of the coarse particles, the performance of the resin film material of the present invention may be reduced. The reduction in the performance of the resin film material of the present invention caused by the presence of the coarse particles becomes more pronounced as the thickness of the film is smaller. Specifically, in the case where a laminate is produced by laminating another material on the resin film material of the present invention due to the reduction in the surface smoothness of the resin film material, the delamination strength may not be increased sufficiently. Accordingly, in the present invention, the resin waste composed of the metal foil layer-attached laminate is removed from the resin waste mixture for the purpose of preventing coarse metal particles being contained in the resin composition produced from the resin waste mixture.

When removing the resin waste composed of the metal foil layer-attached laminate from the resin waste mixture, it is preferable that the metal foil layer-attached laminate and the evaporated metal layer-attached laminate are separated from each other by detecting the metal foil layer-attached laminate using, for example, a separation means such as an electromagnetic sensor, an X-ray sensor, a near-infrared sensor, or a color sensor. It is particularly preferable that the metal foil layer-attached laminate and the evaporated metal layer-attached laminate are separated from each other by detecting the metal foil layer-attached laminate with a thickness of 1 $\mu$m or more. In particular, it is preferable to use an electromagnetic sensor as the separation means because it has high separation accuracy.

In the case where an electromagnetic sensor is used, the metal foil layer-attached laminate and the evaporated metal layer-attached laminate can be separated from each other using the difference in detection voltage value based on the level of magnetic force induced by electric current. Specifically, the metal foil layer-attached laminate and the evaporated metal layer-attached laminate can be separated from each other using the difference in magnetic force induced by the difference between the thickness of the evaporated metal layer and the thickness of the metal foil. Particularly when the thickness of the metal foil layer of the metal foil layer-attached laminate is 1 $\mu$m or more, the metal foil layer-attached laminate and the evaporated metal layer-attached laminate can be separated from each other at even higher accuracy. When an electromagnetic sensor is used, it is possible to obtain an advantageous effect in that, even if the resin waste is dirty, the metal foil layer-attached laminate and the evaporated metal layer-attached laminate can be separated from each other accurately. In contrast, when a color sensor or a near-infrared sensor is used, it may be difficult to accurately separate the metal foil layer-attached laminate and the evaporated metal layer-attached laminate from each other if the resin waste is dirty.

It is preferable to perform separation of the metal foil layer-attached laminate and the evaporated metal layer-attached laminate in an already-used state, from the viewpoint of efficiently performing the separation. For example, in the case where the metal foil layer-attached laminate and the evaporated metal layer-attached laminate are both already-used containers, it is preferable to separate the containers as they are without crushing the containers.

After the resin waste composed of the metal foil layer-attached laminate has been separated and removed from the resin waste mixture in the manner described above, the resin waste mixture left after separation is subjected to melt molding. An ordinary extrusion machine can be used to perform melt molding. For the purpose of efficiently performing melt molding using an extrusion machine, prior to melt molding, it is preferable that the resin waste mixture left after separation is crushed into pieces of a size suitable to be supplied to the extrusion machine, and the resulting crushed pieces are melt molded. A plastic shredder, a cutter mill, or the like can be used to perform crushing.

The crushed resin waste mixture is supplied to the extrusion machine, and melt molded to produce a resin composition. As the melt molding temperature, an appropriate temperature is selected according to the type of resin contained in the resin waste mixture. As a rough value of the melt molding temperature, it is preferable to use a temperature of Mp -30 or more and Mp +30 or less, where the melting point of one of the resins contained in the resin waste mixture that has the highest melting point is represented by Mp (°C), from the viewpoint of performing sufficient melt kneading.

With the resin composition obtained in the manner described above, the resin waste described above is used as the raw material, and thus the resin composition contains preferably any one of a polyolefin resin, a polyester resin, and a polyamide resin, more preferably a polyolefin resin as the main component. From the viewpoint of facilitating the regeneration of resins widely used as the resin materials of packaging containers, it is even more preferable that the resin composition contains polyethylene as the main component.

The resin composition obtained by melt molding the resin waste mixture is usually in the form of pellets. In the resin composition, the metal contained in the resin waste mixture is dispersed in the form of particles.

Various types of molded articles including the resin film material of the present invention can be produced from the resin composition obtained in the manner described above. For example, the resin film material of the present invention can be produced by extrusion molding the resin composition. Also, a three-dimensional resin molded body can be produced by injection molding the resin composition.

A laminate structure can be obtained by laminating an additional material on the resin film material of the present invention obtained by molding the resin composition produced from the resin waste mixture left after separation. Alternatively, in the present invention, a laminate structure can also be produced by co-extrusion molding the resin composition produced from the resin waste mixture left after separation and an additional resin composition. A laminate structure in which the delamination strength between resin layers is high can be smoothly obtained even through co-extrusion molding.

Of course, the method for producing a laminate structure is not limited thereto. The laminate structure can also be produced by bonding film materials through heat sealing, dry lamination, or the like.

Up to here, the present invention was described based on a preferred embodiment thereof. However, the present invention is not limited to the embodiment described above.

With respect to the embodiment described above, the present invention further discloses a resin film material, a laminate structure, a method for producing a resin composition, a method for producing a resin film material, and a method for producing a laminate structure described below.

<1> A resin film material produced from a resin material that includes a laminate that includes a resin layer having an evaporated metal layer made of a metal, the resin film material containing the metal in a form of particles, wherein the metal particles are dispersed in the resin film material, and the number of metal particles with an area-equivalent diameter of 200 $\mu$m or more present per $cm^2$ of the resin film material is 1 or less.

<2> The resin film material as set forth in clause <1>, wherein the number of metal particles with an area-equivalent diameter of 200 $\mu$m or more present per $cm^2$ of the resin film material is preferably 0.7 or less, and more preferably 0.3 or less.

<3> The resin film material as set forth in clause <1> or <2>, wherein the number of metal particles with an area-equivalent diameter of 100 $\mu$m or more present per $cm^2$ of the resin film material is 15 or less.

<4> The resin film material as set forth in clause <3>, wherein the number of metal particles with an area-equivalent diameter of 100 $\mu$m or more present per $cm^2$ of the resin film material is preferably 10 or less, and more preferably 5 or less.

<5> The resin film material as set forth in any one of clauses <1> to <4>, wherein the laminate that includes a resin layer with an evaporated metal layer includes at least one polyolefin layer.

<6> The resin film material as set forth in clause <5>, wherein the polyolefin is polyethylene.

<7> The resin film material as set forth in any one of clauses <1> to <6>, wherein the proportion of the laminate that includes a resin layer with an evaporated metal layer in the resin material is preferably 10 mass% or more and 100 mass% or less, more preferably 15 mass% or more and 90 mass% or less, and even more preferably 20 mass% or more and 80 mass% or less.

<8> The resin film material as set forth in any one of clauses <1> to <7>,

wherein the metal content in the resin film material is preferably 0.01 mass% or more and 0.3 mass% or less, more preferably 0.05 mass% or more and 0.25 mass% or less, and even more preferably 0.1 mass% or more and 0.2 mass% or less.

<9> The resin film material as set forth in any one of clauses <1> to <8>,

wherein the resin film material is produced from a resin material that is made of a laminate group that includes the laminate that includes a resin layer with an evaporated metal layer and a laminate that includes a metal layer-free resin layer.

<10> The resin film material as set forth in clause <9>,

wherein the laminate that includes a metal layer-free resin layer includes a polyolefin layer.

<11> The resin film material as set forth in any one of clauses <1> to <10>,

wherein the laminate that includes a resin layer with an evaporated metal layer includes a polyolefin layer and a layer that contains one type or two or more types of resins selected from the group consisting of a polyester, a polyamide, and a polyimide.

<12> The resin film material as set forth in any one of clauses <1> to <11>,

wherein the proportion of the laminate that includes a resin layer with an evaporated metal layer in the resin material is preferably 10 mass% or more and 100 mass% or less, more preferably 15 mass% or more and 90 mass% or less, and even more preferably 20 mass% or more and 80 mass% or less.

<13> The resin film material as set forth in any one of clauses <1> to <12>,

wherein the metal is aluminum, and
the aluminum content is 0.01 mass% or more and 0.3 mass% or less.

<14> The resin film material as set forth in any one of clauses <1> to <13>,

wherein the laminate that includes a resin layer with an evaporated metal layer is a waste.

<15> The resin film material as set forth in any one of clauses <1> to <14>,

wherein the resin film material contains polyethylene as a main component.

<16> The resin film material as set forth in any one of clauses <1> to <15>,

wherein the resin film material has an average thickness of 10 $\mu$m or more and 500 $\mu$m or less.

<17> The resin film material as set forth in clause <16>,

wherein the resin film material has an average thickness of preferably 15 $\mu$m or more and 300 $\mu$m or less, and more preferably 20 $\mu$m or more and 100 $\mu$m or less.

<18> The resin film material as set forth in any one of clauses <1> to <17>,

wherein the ratio of the average surface-to-surface distance of the metal particles relative to the average particle diameter of the metal particles is greater than 15.

<19> A laminate structure including:

the resin film material as set forth in any one of clauses <1> to <18>; and
a resin layer or a metal foil.

<20> The laminate structure as set forth in clause <19>,

wherein the resin layer is made of an ethylene-vinyl alcohol copolymer.

<21> The laminate structure as set forth in clause <19> or <20>,

wherein the laminate structure is in a form of a packaging container.

<22> A method for producing a resin film material from a resin material that includes a laminate that includes a resin layer with an evaporated metal layer made of a metal, the resin film material containing the metal in the form of particles, the method including the step of:

melt molding the resin material such that the metal particles are dispersed in the resin film material and the number of metal particles with an area-equivalent diameter of 200 $\mu$m or more present per cm$^2$ of the resin film material is 1 or less.

<23> The method for producing a resin film material as set forth in clause <22>,

wherein the number of metal particles with an area-equivalent diameter of 200 $\mu$m or more present per cm$^2$ of the resin film material is preferably 0.7 or less, and more preferably 0.3 or less.

<24> The method for producing a resin film material as set forth in clause <22> or <23>,

wherein the number of metal particles with an area-equivalent diameter of 100 $\mu$m or more present per cm$^2$ of the resin film material is 15 or less.

<25> The method for producing a resin film material as set forth in clause <24>,

wherein the number of metal particles with an area-equivalent diameter of 100 $\mu$m or more present per cm$^2$ of the resin film material is preferably 10 or less, and more preferably 5 or less.

<26> The method for producing a resin film material as set forth in any one of clauses <22> to <25>, wherein the laminate that includes a resin layer with an evaporated metal layer includes at least one polyolefin layer.

<27> The method for producing a resin film material as set forth in clause <26>, wherein the polyolefin is polyethylene.

<28> The method for producing a resin film material as set forth in any one of clauses <22> to <27>, wherein the proportion of the laminate that includes a resin layer with an evaporated metal layer in the resin material is preferably 10 mass% or more and 100 mass% or less, more preferably 15 mass% or more and 90 mass% or less, and even more preferably 20 mass% or more and 80 mass% or less.

<29> The method for producing a resin film material as set forth in any one of clauses <22> to <28>, wherein the metal content in the resin film material is preferably 0.01 mass% or more and 0.3 mass% or less, more preferably 0.05 mass% or more and 0.25 mass% or less, and even more preferably 0.1 mass% or more and 0.2 mass% or less.

<30> The method for producing a resin film material as set forth in any one of clauses <22> to <29>, wherein the resin film material is produced from a resin material that is made of a laminate group that includes the laminate that includes a resin layer with an evaporated metal layer and a laminate that includes a metal layer-free resin layer.

<31> The method for producing a resin film material as set forth in clause <30>, wherein the laminate that includes a metal layer-free resin layer includes a polyolefin layer.

<32> The method for producing a resin film material as set forth in any one of clauses <22> to <31>, wherein the laminate that includes a resin layer with an evaporated metal layer includes a polyolefin layer and a layer that contains one type or two or more types of resins selected from the group consisting of a polyester, a polyamide, and a polyimide.

<33> The method for producing a resin film material as set forth in any one of clauses <22> to <32>, wherein the proportion of the laminate that includes a resin layer with an evaporated metal layer in the resin material is preferably 10 mass% or more and 100 mass% or less, more preferably 15 mass% or more and 90 mass% or less, and even more preferably 20 mass% or more and 80 mass% or less.

<34> The method for producing a resin film material as set forth in any one of clauses <22> to <33>,

wherein the metal is aluminum, and
the aluminum content is 0.01 mass% or more and 0.3 mass% or less.

<35> The method for producing a resin film material as set forth in any one of clauses <22> to <34>, wherein the laminate that includes a resin layer with an evaporated metal layer is a waste.

<36> The method for producing a resin film material as set forth in any one of clauses <22> to <35>, wherein the resin film material has an average thickness of 10 $\mu$m or more and 500 $\mu$m or less.

<37> The method for producing a resin film material as set forth in clause <36>, wherein the resin film material has an average thickness of preferably 15 $\mu$m or more and 300 $\mu$m or less, and more preferably 20 $\mu$m or more and 100 $\mu$m or less.

<38> A method for producing a resin composition, the method including:

removing, from a resin waste mixture that contains a first resin waste that includes a resin layer with a metal foil layer and a second resin waste that includes a resin layer with an evaporated metal layer, the first resin waste that includes a resin layer with a metal foil layer; and
melt molding the resin waste mixture left after removal of the first resin waste to obtain a resin composition in which metal particles derived from the evaporated metal layer are dispersed.

<39> The method for producing a resin composition as set forth in clause <38>, wherein the proportion of the second resin waste that includes a resin layer with an evaporated metal layer in the resin waste mixture left after removal of the first resin waste that includes a resin layer with a metal foil layer is preferably 10 mass% or more and 100 mass% or less, more preferably 15 mass% or more and 90 mass% or less, and even more preferably 20 mass% or more and 80 mass% or less.

<40> The method for producing a resin composition as set forth in clause <38> or <39>, wherein the proportion of the first resin waste that includes a resin layer with a metal foil layer in the resin waste mixture left after removal of the first resin waste is preferably 2 mass% or less, more preferably 1.5 mass% or less, and even more preferably 0 mass%.

<41> The method for producing a resin composition as set forth in any one of clauses <38> to <40>,

wherein the resin waste mixture left after removal of the first resin waste is melt molded at a temperature of Mp -30 or more and Mp +30 or less, where the melting point of one of the resins contained in the resin waste mixture that has the highest melting point is represented by Mp (°C).

<42> The method for producing a resin composition as set forth in any one of clauses <38> to <41>, wherein the metal is aluminum.

<43> The method for producing a resin composition as set forth in any one of clauses <38> to <42>, wherein the first resin waste that includes a resin layer with a metal foil layer is a resin film or a resin container.

<44> The method for producing a resin composition as set forth in any one of clauses <38> to <43>, wherein the second resin waste that includes a resin layer with an evaporated metal layer is a resin film or a resin container.

<45> The method for producing a resin composition as set forth in any one of clauses <38> to <44>, the method including:

crushing the resin waste mixture left after removal of the first resin waste; and
melt molding a crushed material resulting therefrom.

<46> The method for producing a resin composition as set forth in any one of clauses <38> to <45>, wherein the first resin waste is removed by detecting the first resin waste with a metal foil layer with a thickness of 1 µm or more using an electromagnetic sensor, an X-ray sensor, a near-infrared sensor, or a color sensor.

<47> The method for producing a resin composition as set forth in clause <46>, wherein the first resin waste is removed by detecting the first resin waste with a metal foil layer with a thickness of 1 µm or more based on a level of magnetic force induced by electric current using an electromagnetic sensor.

<48> A method for producing a resin film material, the method including:

producing a resin composition using the method as set forth in any one of clauses <38> to <47>; and
extrusion molding the resin composition.

<49> The method for producing a resin film material as set forth in clause <48>, wherein the metal content in the resin film material is preferably 0.01 mass% or more and 0.3 mass% or less, more preferably 0.05 mass% or more and 0.25 mass% or less, and even more preferably 0.1 mass% or more and 0.2 mass% or less.

<50> The method for producing a resin film material as set forth in clause <48> or <49>, wherein the number of metal particles with an area-equivalent diameter of 200 µm or more present per $cm^2$ of the resin film material is preferably 0.7 or less, and more preferably 0.3 or less.

<51> The method for producing a resin film material as set forth in any one of clauses <48> to <50>, wherein the number of metal particles with an area-equivalent diameter of 100 µm or more present per $cm^2$ of the resin film material is preferably 10 or less, and more preferably 5 or less.

<52> The method for producing a resin film material as set forth in any one of clauses <48> to <51>, wherein the resin film material has an average thickness of preferably 10 µm or more and 500 µm or less, more preferably 15 µm or more and 300 µm or less, and even more preferably 20 µm or more and 100 µm or less.

<53> A method for producing a laminate structure, the method including:

producing a resin composition using the method as set forth in any one of clauses <38> to <47>; and
co-extrusion molding or extrusion lamination molding the resin composition.

<54> A method for producing a laminate structure, the method including:
laminating a resin film material produced using the method as set forth in any one of clauses <48> to <52> and a resin layer.

<55> The method for producing a laminate structure as set forth in clause <54>, wherein the resin layer contains polyolefin.

<56> The method for producing a laminate structure as set forth in clause <55>, wherein the resin layer contains polyethylene as a main component.

Examples

Hereinafter, the present invention will be described in further detail based on examples. However, the scope of the present invention is not limited to the examples given below. Unless otherwise stated, the percent sign "%" used herein means "mass%".

Example 1-1

(1) Preparation of Resin Material

A resin material was prepared by crushing a cleaned waste of an already-used packaging container. The container was made of an aluminum evaporation layer-attached laminate in which a 12 μm-thick polyethylene tereph-thalate layer, a 50 nm-thick aluminum evaporation layer, a 15 μm-thick nylon layer, and a 120 μm-thick linear low-density polyethylene layer were laminated.

(2) Production of Resin Film Material

The resin material obtained in (1) above (100 parts) and a compatibilizer (2.5 parts, LTMEX 1001 available From Sanyo Chemical Industries, Ltd., maleic anhydride-modified polypropylene, with a melt viscosity of 15000 mPa·s (160°C, BL-type viscometer)) were supplied to a biaxial extrusion machine (TEX-28V with a screw diameter of 28 mm, L/D = 42, available from Japan Steel Works, Ltd.), and melt kneaded at 230°C to produce pellets. The produced pellets were continuously molded at 230°C for 30 minutes using a T-die extrusion machine (300 mm T-die available from Research Laboratory of Plastics Technology Co., Ltd.) (at a molding speed of 6.9 m/min using about 3 kg of the pellets), and an aluminum-containing resin film material was thereby produced.

Example 1-2

(1) Preparation of Resin Material

A resin material was prepared by crushing a cleaned waste of an already-used packaging container. The container was made of an aluminum evaporation layer-attached laminate in which a 12 μm-thick polyethylene tereph-thalate layer, a 50 nm-thick aluminum evaporation layer, a 15 μm-thick nylon layer, and a 120 μm-thick linear low-density polyethylene layer were laminated.
Apart from the container, another cleaned waste of an already-used packaging container was crushed. The container was made of a metal layer-free laminate including a 15 μm-thick nylon layer and a 120 μm-thick linear low-density polyethylene layer.
Furthermore, apart from the above-described containers, another cleaned waste of an already-used packaging container was crushed. The container was made of an aluminum foil layer-attached laminate in which a 7 μm-thick aluminum foil layer, a 15 μm-thick nylon layer, and a 120 μm-thick linear low-density polyethylene layer were laminated on a 12 μm-thick polyethylene terephthalate layer.
The aluminum evaporation layer-attached laminate, the metal layer-free laminate, and the aluminum foil layer-attached laminate were combined to obtain a resin material made of a laminate group. The proportion of the aluminum evaporation layer-attached laminate in the resin material was 26%, the proportion of the metal layer-free laminate in the resin material was 73%, and the proportion of the aluminum foil layer-attached laminate in the resin material was 1%.

(2) Production of Resin Film Material

An aluminum-containing resin film material was produced in the same manner as in Example 1-1, except that the resin material obtained (1) above was used.

Example 1-3

(1) Preparation of Resin Material

A resin material was prepared by crushing a cleaned waste of an already-used packaging container. The container was made of an aluminum evaporation layer-attached laminate in which a 12 μm-thick polyethylene tereph-thalate layer, a 50 nm-thick aluminum evaporation layer, a 15 μm-thick nylon layer, and a 120 μm-thick linear low-density polyethylene layer were laminated.
Apart from the container, another cleaned waste of an already-used packaging container was crushed. The container was made of a metal layer-free laminate including a 15 μm-thick nylon layer and a 120 μm-thick linear low-density polyethylene layer.
The aluminum evaporation layer-attached laminate and the metal layer-free laminate were combined to obtain a resin material made of a laminate group. The proportion of the aluminum evaporation layer-attached laminate in the resin material was 26%, and the proportion of the metal layer-free laminate in the resin material was 74%.

(2) Production of Resin Film Material

An aluminum-containing resin film material was produced in the same manner as in Example 1-1, except that the resin material obtained (1) above was used.

Comparative Example 1-1

(1) Preparation of Resin Material

A resin material was prepared by crushing a cleaned waste of a packaging container scrap material. The container was made of a metal layer-free laminate including a 12 $\mu$m-thick polyethylene terephthalate layer, a 15 $\mu$m-thick nylon layer, and a 100 $\mu$m-thick linear low-density polyethylene layer.

(2) Production of Resin Film Material

The resin material obtained in (1) above was supplied to a biaxial extrusion machine (TEX-28V with a screw diameter of 28 mm, L/D = 42, available from Japan Steel Works, Ltd.), and melt kneaded at 230°C to produce pellets.
The produced pellets were continuously molded at 230°C for 30 minutes using a T-die extrusion machine (300 mm T-die available from Research Laboratory of Plastics Technology Co., Ltd.) (at a molding speed of 6.9 m/min using about 9 kg of the pellets) to produce a metal-free resin film material.

Comparative Example 1-2

(1) Preparation of Resin Material

A cleaned waste of an already-used packaging container was crushed. The container was made of an aluminum evaporation layer-attached laminate in which a 50 nm-thick aluminum evaporation layer, a 15 $\mu$m-thick nylon layer, and a 120 $\mu$m-thick linear low-density polyethylene layer were laminated on a 12 $\mu$m-thick polyethylene terephthalate layer.
Apart from the container, another cleaned waste of an already-used packaging container was crushed. The container was made of a metal layer-free laminate including a 15 $\mu$m-thick nylon layer and a 120 $\mu$m-thick linear low-density polyethylene layer.
Furthermore, apart from the above-described containers, another cleaned waste of an already-used packaging container was crushed. The container was made of an aluminum foil layer-attached laminate in which a 7 $\mu$m-thick aluminum foil layer, a 15 $\mu$m-thick nylon layer, and a 120 $\mu$m-thick linear low-density polyethylene layer were laminated on a 12 $\mu$m-thick polyethylene terephthalate layer.
The aluminum evaporation layer-attached laminate, the metal layer-free laminate, and the aluminum foil layer-attached laminate were combined to obtain a resin material made of a laminate group. The proportion of the aluminum evaporation layer-attached laminate in the resin material was 25%, the proportion of the metal layer-free laminate in the resin material was 72%, and the proportion of the aluminum foil layer-attached laminate in the resin material was 3%.

(2) Production of Resin Film Material

An aluminum-containing resin film material was produced in the same manner as in Example 1-1, except that the resin material obtained (1) above was used.

Evaluation

For each of the resin film materials obtained in Examples and Comparative Examples, average thickness, the number of aluminum particles with an area-equivalent diameter of 200 $\mu$m or more, the number of aluminum particles with an area-equivalent diameter of 100 $\mu$m or more, aluminum content, h/Dp, thermal expansion coefficient, root mean square height $R_Q$, and delamination strength were measured using the methods described below. The results are shown in Table 1 given below.

Average Thickness

For each of the resin film materials obtained in Examples and Comparative Examples, the thickness of the resin film material was measured at five points using a micrometer (MDC 25-MX available from Mitutoyo Corporation), and the average value was defined as the average thickness of the film.

Number of Aluminum Particles with Area-Equivalent Diameter of 200 mm or More and Number of Aluminum Particles with Area-Equivalent Diameter of 100 mm or More

Each of the resin film materials obtained in Examples and Comparative Examples was observed at a magnification of 20 times using an optical microscope (VHX-5000 available from Keyence Corporation). The transmission light intensity was set to the maximum level to observe only aluminum particles that were not light transmissive. The number of aluminum particles with an area-equivalent diameter of 200 $\mu$m or more and the number of aluminum particles with an area-equivalent diameter of 100 $\mu$m or more present in a total field of view of 9.8 cm$^2$ were counted to calculate the numbers of particles per unit area.

Aluminum Content

Each of the resin film materials obtained in Examples and Comparative Examples precisely weighed to 0.1 g was placed in a platinum crucible. The resin film material was heated until no white smoke was emitted. After that, sulfuric acid was added dropwise, and ashing processing was performed. After sufficiently ashed in an electric furnace at 550°C, 1 g of an alkaline flux (sodium carbonate:boric acid = 1:0.4 (mass ratio)) was added, and the material was melted in an electric furnace at 950°C. A watch glass was placed on the material, ultrapure water and 5 mL of 6N hydrochloric acid were added, and the material was heated and melted on a hot plate at 80°C. After cooling, the material was diluted with ultrapure water to 50 mL to obtain a sample measurement solution. The prepared sample measurement solution was subjected to aluminum content measurement using an ICP emission spectrometer (iCAP 6500 Duo available from Thermo Fisher Scientific Inc.) under the following conditions.

Wavelength: Al 396.152 nm
RF power: 1150 W
Coolant gas flow rate: 12 L/min
Nebulizer flow rate: 0.70 L/min
Auxiliary gas: 0.5 L/min
Pump flow rate: 50 rpm

h/Dp

Aluminum particle volume concentration F was calculated from aluminum content, aluminum density (2.7 g/cm$^3$), and resin density (1.0 g/cm$^3$), and h/Dp was determined from the Bansal and Ardell's approximation equation using the calculated particle volume concentration F.

Thermal Expansion Coefficient

A strip-shaped sample with a width of 3 mm and a length of 40 mm was heated in a nitrogen atmosphere from room temperature (25°C) to 150°C using a thermal stress strain measuring apparatus (product name: EXSTAR TMA/SS 6100 available from Seiko Instruments, Inc.). The rate of temperature increase was set to 5°C/min. The measurement was performed in a tensile mode, and the load was set to 50 g. Thermal expansion coefficient at 40°C was calculated.

Root Mean Square Height R$_Q$

Measurement was performed under the following conditions using a laser microscope (product name: VK-9710 available from Keyence Corporation).

Objective lens: 10 times
Light intensity: 3%
Brightness: 1548
Z pitch: 0.2 $\mu$m

An average value obtained by measuring at 5 points using pre-installed image processing software was defined as the root mean square height of the film. The smaller the root mean square height, the higher the smoothness of the film.

Delamination Strength

For each of the resin film materials obtained in Examples and Comparative Examples, two sheets of the resin film material were laminated and heat sealed under the following conditions using a heat sealer, and then, a test piece

(15 mm $\times$ 60 mm) was cut out therefrom.

    Sealing temperature: 170°C
    Sealing time: 2 seconds
    Sealing pressure: 0.2 MPa

Next, using the test piece, delamination strength was measured based on the T peel test under the following conditions using an autograph universal testing machine (AG-500E available from Shimadzu Corporation).

    Load cell: 1 kN
    Tensile speed: 100 mm/min
    Chuck-to-chuck distance: 50 mm

[Table 1]

| | Example 1-1 | Example 1-2 | Example 1-3 | Comparative Example 1-1 | Comparative Example 1-2 |
|---|---|---|---|---|---|
| Type and proportion of resin material | Al evaporation layer-attached laminate: 100% | Al evaporation layer-attached laminate: 26%<br><br>Metal layer-free laminate: 73%<br><br>Al foil layer-attached laminate: 1% | Al evaporation layer-attached laminate: 26%<br><br>Metal layer-free laminate: 74% | Metal layer-free laminate: 100% | Al evaporation layer-attached laminate: 25%<br><br>Metal layer-free laminate: 72%<br><br>Al foil layer-attached laminate: 3% |
| Average thickness ($\mu$m) | 32 | 31 | 40 | 141 | 30 |
| Al content (mass%) | 0.12 | 0.16 | 0.13 | 0 | 0.44 |
| h/Dp | 34 | 27 | 32 | - | 11 |
| Thermal expansion coefficient at 40°C (ppm/K) | 16 | 15 | 23 | 65 | 36 |
| Number of Al particles with area-equivalent diameter of 200 $\mu$m or more (per cm$^2$ of film) | 0 | 0 | 0 | 0 | 1.6 |
| Number of Al particles with area-equivalent diameter of 100 $\mu$m or more (per cm$^2$ of film) | 0 | 1.5 | 0 | 0 | 17.5 |
| Root mean square height $R_Q$ ($\mu$m) | 7.8 | 9.0 | 6.8 | 5.3 | 14.5 |
| Delamination strength (N/15 mm) | 20 | 19 | 22 | 21 | 18 |

As can be clearly seen from the results shown in Table 1, the resin film materials obtained in Examples had a small thermal expansion coefficient and a low root mean square height $R_Q$. It can also be seen that, due to the root mean square height $R_Q$ being low, the resin film materials obtained in Examples exhibited high values in terms of delamination strength.

In contrast, the resin film material of Comparative Example 1-1 that did not contain aluminum exhibited a high value in terms of thermal expansion rate.

The resin film material of Comparative Example 1-2 contained aluminum, and thus exhibited a lower value in terms of thermal expansion rate as compared with that of the resin film material of Comparative Example 1-1 that did not contain aluminum, but exhibited a higher value in terms of thermal expansion rate as compared with those of the resin film materials of Examples because the resin film material of Comparative Example 1-2 contained coarse aluminum particles.

Example 2-1

(1) Preparation of Resin Waste Material Mixture

An already-used packaging container A, an already-used packaging container B, and an already-used packaging container C were combined, and it was used as a resin waste mixture.

The packaging container A was made of an aluminum evaporation layer-attached laminate in which a 50 nm-thick aluminum evaporation layer, a 15 $\mu$m-thick nylon layer, and a 120 $\mu$m-thick linear low-density polyethylene layer were laminated on a 12 $\mu$m-thick polyethylene terephthalate layer.

The packaging container B was made of a metal layer-free laminate including a 15 $\mu$m-thick nylon layer and a 120 $\mu$m-thick linear low-density polyethylene layer.

The packaging container C was made of an aluminum foil layer-attached laminate in which a 7 $\mu$m-thick aluminum foil layer, a 15 $\mu$m-thick nylon layer, and a 120 $\mu$m-thick linear low-density polyethylene layer were laminated on a 12 $\mu$m-thick polyethylene terephthalate layer.

(2) Separation

Using an electromagnetic sensor-equipped handheld metal detector (JM-9V2 available from Japanese Metal Detector Manufacturing Co., Ltd.) with the sensitivity being set to 1, the already-used packaging container C was detected from the resin waste mixture, and selectively separated and removed. The proportion of the already-used packaging container A in the resin waste mixture left after separation was 26%, the proportion of the already-used packaging container B in the resin waste mixture left after separation was 73%, and the proportion of the already-used packaging container C in the resin waste mixture left after separation was 1%.

(3) Melt Molding

The resin waste mixture left after separation was crushed into fine pieces, and then supplied to a biaxial extrusion machine (TEX-28V with a screw diameter of 28 mm, L/D = 42, available from Japan Steel Works, Ltd.) together with a compatibilizer (LTMEX 1001 available From Sanyo Chemical Industries, Ltd., maleic anhydride-modified polypropylene, with a melt viscosity of 15000 mPa·s (160°C, BL-type viscometer)), and melt kneaded at 230°C to produce a resin composition in the form of pellets.

(4) Production of Resin Film Material

An aluminum-containing resin film material was produced by T-die molding the produced pellets at 230°C.

Example 2-2

(1) Preparation of Resin Waste Material Mixture

A resin waste mixture was prepared in the same manner as in Example 2-1.

(2) Separation

Using a metal detector (ND-840 available from Nissin Electronics Co., Ltd.) with the analog sensitivity being set to 5 and the digital sensitivity being set to 10, the already-used packaging container C was detected from the resin waste mixture, and selectively separated and removed. The proportion of the already-used packaging container A in the resin waste mixture left after separation was 26%, and the proportion of the already-used packaging container B in the resin waste mixture left after separation was 74%.

(3) Melt Molding

Melt molding was performed in the same manner as in Example 2-1.

(4) Production of Resin Film Material

A resin film material was produced in the same manner as in Example 2-1.

Comparative Example 2-1

(1) Preparation of Resin Waste Material Mixture

A resin waste mixture was prepared in the same manner as in Example 2-1.

(2) Separation

In this comparative example, separation was not performed. Accordingly, the resin waste mixture was composed of the already-used packaging container A, the already-used packaging container B, and the already-used packaging container C. The proportion of the already-used packaging container A in the resin waste mixture was 25%, the proportion of the already-used packaging container B in the resin waste mixture was 72%, and the proportion of the already-used packaging container C in the resin waste mixture was 3%.

(3) Melt Molding

Melt molding was performed in the same manner as in Example 2-1.

(4) Production of Resin Film Material

A resin film material was produced in the same manner as in Example 2-1.

Evaluation

For each of the resin film materials obtained in Examples and Comparative Examples, average thickness, the number of aluminum particles with an area-equivalent diameter of 200 $\mu$m or more, the number of aluminum particles with an area-equivalent diameter of 100 $\mu$m or more, aluminum content, thermal expansion coefficient, root mean square height $R_Q$, and delamination strength were measured using the methods described above. The results are shown in Table 2 given below.

[Table 2]

| | Example 2-1 | Example 2-2 | Comparative Example 2-1 |
|---|---|---|---|
| Resin waste mixture before separation | Al evaporation layer-attached laminate<br>Metal layer-free laminate<br>Al foil layer-attached laminate | | |
| Resin waste mixture left after separation | Al evaporation layer-attached laminate: 26%<br><br>Metal layer-free laminate: 73%<br>Al foil layer-attached laminate: 1% | Al evaporation layer-attached laminate: 26%<br><br>Metal layer-free laminate: 74% | Al evaporation layer-attached laminate: 25%<br>Metal layer-free laminate: 72%<br>Al foil layer-attached laminate: 3% |
| Average thickness ($\mu$m) | 31 | 40 | 30 |
| Al content (mass%) | 0.16 | 0.13 | 0.44 |

(continued)

|  | Example 2-1 | Example 2-2 | Comparative Example 2-1 |
|---|---|---|---|
| Resin waste mixture before separation | Al evaporation layer-attached laminate<br>Metal layer-free laminate<br>Al foil layer-attached laminate | | |
| Resin waste mixture left after separation | Al evaporation layer-attached laminate: 26%<br>Metal layer-free laminate: 73%<br>Al foil layer-attached laminate: 1% | Al evaporation layer-attached laminate: 26%<br>Metal layer-free laminate: 74% | Al evaporation layer-attached laminate: 25%<br>Metal layer-free laminate: 72%<br>Al foil layer-attached laminate: 3% |
| Thermal expansion coefficient at 40°C (ppm/K) | 15 | 23 | 36 |
| Number of Al particles with area-equivalent diameter of 200 $\mu$m or more (per $cm^2$ of film) | 0 | 0 | 1.6 |
| Number of Al particles with area-equivalent diameter of 100 $\mu$m or more (per $cm^2$ of film) | 1.5 | 0 | 17.5 |
| Root mean square height $R_Q$ ($\mu$m) | 9.0 | 6.8 | 14.5 |
| Delamination strength (N/15 mm) | 19 | 22 | 18 |

As can be clearly seen from the results shown in Table 2, the resin film materials obtained in Examples 2-1 and 2-2 had a small thermal expansion coefficient and a low root mean square height $R_Q$. It can also be seen that, due to the root mean square height $R_Q$ being low, the resin film materials obtained in Examples 2-1 and 2-2 exhibited high values in terms of delamination strength.

In contrast, the resin film material of Comparative Example 2-1 exhibited higher values in terms of thermal expansion coefficient and root mean square height $R_Q$ as compared with those of the resin film materials of Examples 2-1 and 2-2 because the resin film material of Comparative Example 2-1 contained coarse aluminum particles.

Industrial Applicability

As described in detail above, according to the present invention, it is possible to provide a resin film material that is suitable for use as a raw material for producing a laminate that has a high surface smoothness and a high delamination strength.

Also, according to the method of the present invention, it is possible to produce a regenerated resin suitable to mold a resin film material that is suitable for use as a raw material for producing a laminate that has a high surface smoothness and a high delamination strength.

**Claims**

1. A resin film material produced from a resin material that includes a laminate that includes a resin layer having an evaporated metal layer, the resin film material containing a metal in the evaporated metal layer in a form of particles, wherein the metal particles are dispersed in the resin film material, and the number of metal particles with an area-equivalent diameter of 200 $\mu$m or more present per $cm^2$ of the resin film material is 1 or less.

2. The resin film material according to claim 1, wherein the number of metal particles with an area-equivalent diameter of 100 $\mu$m or more present per $cm^2$ of the resin film material is 15 or less.

**3.** The resin film material according to claim 1 or 2,
wherein the resin film material is produced from a resin material that is made of a laminate group that includes the laminate that includes a resin layer with an evaporated metal layer and a laminate that includes a metal layer-free resin layer.

**4.** The resin film material according to claim 3,
wherein the laminate that includes a metal layer-free resin layer includes a polyolefin layer.

**5.** The resin film material according to any one of claims 1 to 4,
wherein the laminate that includes a resin layer with an evaporated metal layer includes a polyolefin layer and a layer that contains one type or two or more types of resins selected from the group consisting of a polyester, a polyamide, and a polyimide.

**6.** The resin film material according to any one of claims 1 to 5,
wherein the proportion of the laminate that includes a resin layer with an evaporated metal layer in the resin material is 10 mass% or more and 100 mass% or less.

**7.** The resin film material according to any one of claims 1 to 6,

wherein the metal is aluminum, and
the aluminum content is 0.01 mass% or more and 0.3 mass% or less.

**8.** The resin film material according to any one of claims 1 to 7,
wherein the laminate that includes a resin layer with an evaporated metal layer is a waste.

**9.** The resin film material according to any one of claims 1 to 8,
wherein the resin film material has an average thickness of 10 $\mu$m or more and 500 $\mu$m or less.

**10.** The resin film material according to any one of claims 1 to 9,
wherein the ratio of the average surface-to-surface distance of the metal particles relative to the average particle diameter of the metal particles is greater than 15.

**11.** A laminate structure comprising:

the resin film material according to any one of claims 1 to 10; and
a resin layer or a metal foil.

**12.** The laminate structure according to claim 11,
wherein the resin layer is made of an ethylene-vinyl alcohol copolymer.

**13.** The laminate structure according to claim 11 or 12,
wherein the laminate structure is in a form of a packaging container.

**14.** A method for producing a resin composition, the method comprising:

removing, from a resin waste mixture that contains a first resin waste that includes a resin layer with a metal foil layer and a second resin waste that includes a resin layer with an evaporated metal layer, the first resin waste that includes a resin layer with a metal foil layer; and
melt molding the resin waste mixture left after removal of the first resin waste to obtain a resin composition in which metal particles derived from the evaporated metal layer are dispersed.

**15.** The method for producing a resin composition according to claim 14,
wherein the first resin waste that includes a resin layer with a metal foil layer is a resin film or a resin container.

**16.** The method for producing a resin composition according to claim 14 or 15,
wherein the second resin waste that includes a resin layer with an evaporated metal layer is a resin film or a resin container.

**17.** The method for producing a resin composition according to any one of claims 14 to 16, the method comprising:

crushing the resin waste mixture left after removal of the first resin waste; and
melt molding a crushed material resulting therefrom.

**18.** The method for producing a resin composition according to any one of claims 14 to 17,
wherein the first resin waste is removed by detecting the first resin waste with a metal foil layer with a thickness of 1 $\mu$m or more using an electromagnetic sensor, an X-ray sensor, a near-infrared sensor, or a color sensor.

**19.** The method for producing a resin composition according to claim 18,
wherein the first resin waste is removed by detecting the first resin waste with a metal foil layer with a thickness of 1 $\mu$m or more based on a level of magnetic force induced by electric current using an electromagnetic sensor.

**20.** A method for producing a resin film material, the method comprising:

producing a resin composition using the method according to any one of claims 14 to 19; and
extrusion molding the resin composition.

**21.** The method for producing a resin film material according to claim 20,
wherein the number of metal particles with an area-equivalent diameter of 200 $\mu$m or more present per cm$^2$ of the resin film material is 0.7 or less.

**22.** The method for producing a resin film material according to claim 20 or 21,
wherein the number of metal particles with an area-equivalent diameter of 100 $\mu$m or more present per cm$^2$ of the resin film material is 10 or less.

**23.** The method for producing a resin film material according to any one of claims 20 to 22,
wherein the resin film material has an average thickness of 10 $\mu$m or more and 500 $\mu$m or less.

**24.** A method for producing a laminate structure, the method comprising:

producing a resin composition using the method according to any one of claims 14 to 19; and
co-extrusion molding or extrusion lamination molding the resin composition.

**25.** A method for producing a laminate structure, the method comprising
laminating a resin film material produced using the method according to any one of claims 20 to 23 and a resin layer.

**26.** The method for producing a laminate structure according to claim 25,
wherein the resin layer contains polyolefin.

**27.** The method for producing a laminate structure according to claim 26,
wherein the resin layer contains polyethylene as a main component.

## INTERNATIONAL SEARCH REPORT

| | International application No. |
|---|---|
| | **PCT/JP2021/043954** |

**A. CLASSIFICATION OF SUBJECT MATTER**

*B32B 27/00*(2006.01)i; *B32B 27/20*(2006.01)i; *B29B 17/02*(2006.01)i; *C08L 23/02*(2006.01)i; *C08L 67/00*(2006.01)i; *C08L 77/00*(2006.01)i; *C08L 101/00*(2006.01)i; *C08L 79/08*(2006.01)i; *B32B 15/08*(2006.01)i; *C08K 3/08*(2006.01)i
FI: B29B17/02 ZAB; B32B15/08 F; B32B27/20 Z; B32B27/00 H; C08K3/08; C08L23/02; C08L67/00; C08L77/00; C08L79/08; C08L101/00

According to International Patent Classification (IPC) or to both national classification and IPC

**B. FIELDS SEARCHED**

Minimum documentation searched (classification system followed by classification symbols)

B32B27/00; B32B27/20; B29B17/02; C08L23/02; C08L67/00; C08L77/00; C08L101/00; C08L79/08; B32B15/08; C08K3/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-167736 A (RAKUTEN SYOJI Y. K.) 05 August 2010 (2010-08-05) claims, paragraphs [0015]-[0022], examples 1, 2 | 1-27 |
| X | JP 2013-35272 A (TOWA CHEMICAL CO., LTD.) 21 February 2013 (2013-02-21) claims, paragraphs [0007], [0024], examples | 1-13 |
| A | | 14-27 |
| A | WO 2020/166522 A1 (FURUKAWA ELECTRIC CO., LTD.) 20 August 2020 (2020-08-20) | 1-27 |
| A | JP 2020-49942 A (DAINIPPON PRINTING CO., LTD.) 02 April 2020 (2020-04-02) | 1-27 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 January 2022** | **08 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/043954**

| Patent document cited in search report | | | Publication date (day/month/year) | Patent family member(s) | | | Publication date (day/month/year) |
|---|---|---|---|---|---|---|---|
| JP | 2010-167736 | A | 05 August 2010 | (Family: none) | | | |
| JP | 2013-35272 | A | 21 February 2013 | CN | 102862247 | A | |
| WO | 2020/166522 | A1 | 20 August 2020 | (Family: none) | | | |
| JP | 2020-49942 | A | 02 April 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002309005 A
- JP 2006192748 A
- JP 2012021200 A
- JP 2013035272 A
- US 2019062921